(19) Europäisches Patentamt
European Patent Office
Office européen des brevets

(11) EP 3 817 216 A1

(12) EUROPEAN PATENT APPLICATION

(43) Date of publication:
**05.05.2021 Bulletin 2021/18**

(51) Int Cl.:
***H02N 1/04*** *(2006.01)*

(21) Application number: **19275114.7**

(22) Date of filing: **01.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **GELEBART,, Anne Helene**
  **4612 PX Bergen op Zoom (NL)**
- **VAN ZYL,, André**
  **4612 PX Bergen op Zoom (NL)**

(74) Representative: **Potter Clarkson**
**The Belgrave Centre**
**Talbot Street**
**Nottingham NG1 5GG (GB)**

(54) **TRIBOELECTRIC FIBERS FOR FABRIC APPLICATIONS**

(57) A conductive fabric includes a plurality of woven fibers including a triboelectric polymer and a conductive material incorporated into the plurality of woven fibers. An energy harvesting system includes: (a) a conductive fabric including a plurality of woven fibers including a triboelectric polymer and a conductive material incorporated into the plurality of woven fibers; (b) a voltage rectifier; and (c) an energy storage unit. The triboelectric polymer includes from 80 wt% to 99 wt% of a cross-linkable thermoplastic polymer component and from 1 wt% to 20 wt% of a halogenated silsesquioxane component.

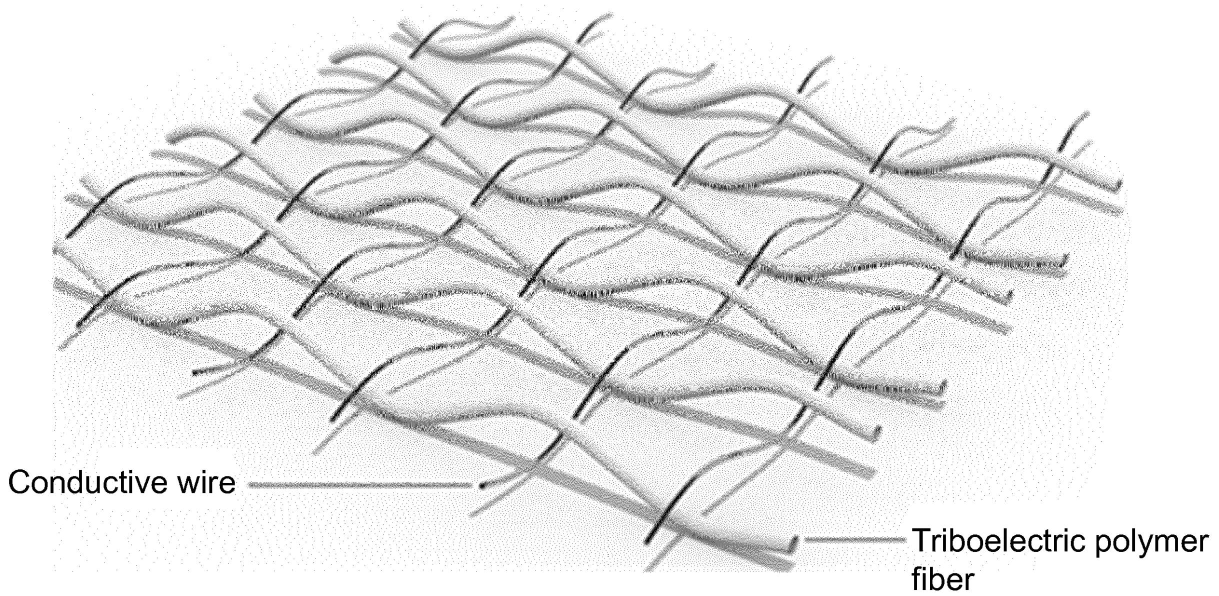


FIG. 1

EP 3 817 216 A1

## Description

### FIELD OF THE DISCLOSURE

The present disclosure relates to conductive fabrics, and more particularly to conductive fabrics including woven fibers including a triboelectric polymer and a conductive material incorporated into the plurality of woven fibers.

### BACKGROUND OF THE DISCLOSURE

Current health monitoring system are often uncomfortable for the user. In the hospital, wired solutions limit the freedom of motion of the patient. For activity tracking, indirect solutions are used to monitor breathing functions, including optical-based technologies or mechanical solutions such as a strap that can be inconvenient to place and remove and that can cause irritation to the skin. Recently, "smart clothing" having the sensing elements integrated directly within the textile have been developed. These fabrics require a bulky and rigid component that includes sensors such as an accelerometer, position sensor, etc. In addition, these solutions require a battery to power the sensors, and the conductive track is printed on the inner side of the shirt which can be uncomfortable and /or lack breathability. Piezoelectric materials could replace the battery, but such materials must be poled under high voltage and thus remain undesirable.
These and other shortcomings are addressed by aspects of the disclosure.

### SUMMARY

Aspects of the disclosure relate to a conductive fabric including a plurality of woven fibers including a triboelectric polymer and a conductive material incorporated into the plurality of woven fibers. The triboelectric polymer includes from 80 wt% to 99 wt% of a cross-linkable thermoplastic polymer component and from 1 wt% to 20 wt% of a halogenated silsesquioxane component.
Aspects of the disclosure further relate to an energy harvesting system including: (a) a conductive fabric including a plurality of woven fibers including a triboelectric polymer and a conductive material incorporated into the plurality of woven fibers; (b) a voltage rectifier; and (c) an energy storage unit. The triboelectric polymer includes from 80 wt% to 99 wt% of a cross-linkable thermoplastic polymer component and from 1 wt% to 20 wt% of a halogenated silsesquioxane component.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a diagram of a conductive fabric according to one aspect of the disclosure.
FIG. 2 is a diagram of a conductive fabric according to another aspect of the disclosure.
FIG. 3 is a block diagram of an energy harvesting system according to aspects of the disclosure.
FIG. 4 is a detailed schematic diagram of an energy harvesting unit with circuit elements according to aspects of the disclosure.

### DETAILED DESCRIPTION

The present disclosure can be understood more readily by reference to the following detailed description of the disclosure and the Examples included therein. In various aspects, the present disclosure pertains to triboelectric polymers and their use thereof in conductive fabrics for energy harvesting or sensing applications. Triboelectric polymers, being typically electronegative, can generate electricity upon friction or contact with an electropositive surface such as skin. The voltage created is relatively high (typically greater than 5 volts). It can be sensed and processed by common electrical components.
The disclosure describes a triboelectric polymer blend including a cross-linkable thermoplastic polymer component a halogenated silsesquioxane component. A conductive fabric includes a plurality of woven fibers including the triboelectric polymer and a conductive material incorporated into the plurality of woven fibers. In some aspects the conductive material includes a conductive wire that is co-woven with the plurality of woven fibers. In further aspects the plurality of woven fibers include a core-shell structure, with the core including a conductive wire and the shell including the triboelectric polymer. The fabric can be incorporated into a garment such as a shirt, and when worn by a person

(such as a patient in a hospital), friction occurs and the charges generated can be collected or sensed.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula:

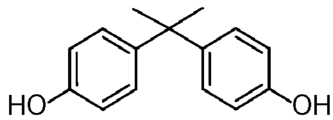

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Conductive Fabrics Including Woven Fibers

Aspects of the disclosure relate to a conductive fabric including a plurality of woven fibers including a triboelectric polymer, and a conductive material incorporated into the plurality of woven fibers. The triboelectric polymer includes from 80 wt% to 99 wt% of a cross-linkable thermoplastic polymer component and from 1 wt% to 20 wt% of a halogenated silsesquioxane component.

The cross-linkable thermoplastic polymer component includes, but is not limited to, a cross-linkable polycarbonate (XPC), a cross-linkable polyetherimide (XPEI), a polyphenylene ether (XPPE), a polyethylene (XPE), a polypropylene (XPP), copolymers thereof, or a combination thereof.

In a particular aspect the cross-linkable thermoplastic polymer component is a cross-linkable polycarbonate (XPC). XPC is a photoactive cross-linkable polycarbonate resin that includes 0.5 mole % to 5.0 mole % endcap groups derived from monohydroxybenzophenone, including from 1.0 mole % to 5.0 mole, or from 1.5 mole % to 4.5 mole %, or from 2.0 mole % to 4.5 mole %, or from 2.5 mole % to 4.0 mole %, or from 3.0 mole % to 4.0 mole % endcap groups derived from the monohydroxybenzophenone. Most desirably, the monohydroxybenzophenone is 4-hydroxybenzophenone. In a particular aspect the resin includes 3.5 mole % endcap groups derived from 4-hydroxybenzophenone, as shown in formula (1) below:

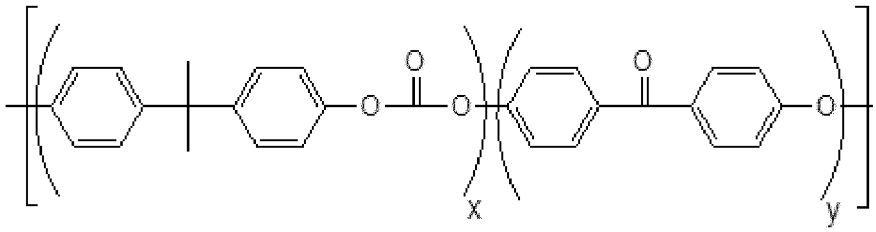

y = 3.5% (1)

XPC may be formed in accordance with the methods described in U.S. Patent Publication No. 2017/0247507, the disclosure of which is incorporated herein by this reference in its entirety. In one aspect the XPC is derived from bisphenol-A polycarbonate and includes 3.5 mole % benzophenone moieties.

In some aspects the halogenated silsesquioxane component is a perfluorinated polyhedral oligomeric silsesquioxane (F-POSS). F-POSS is trifluoropropyl polyhedral oligomeric silsesquioxane, and has the chemical structure shown in formula (2):

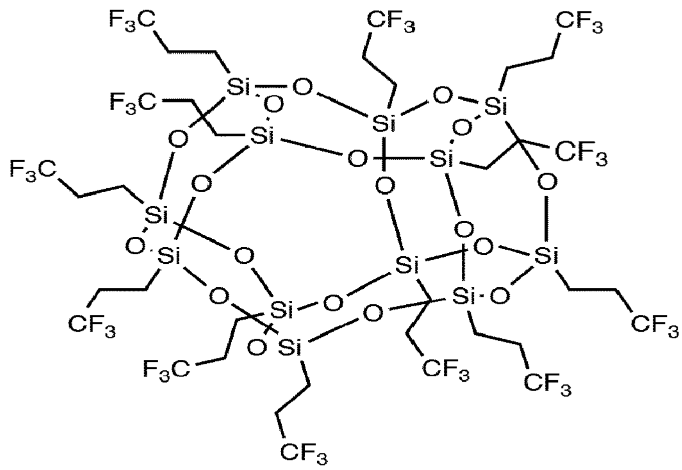

(2)

In a particular aspect the triboelectric polymer includes from 80 wt% to 99 wt% XPC and from 1 wt% to 20 wt% F-POSS.

In some aspects the triboelectric polymer includes from 80 wt% to 90 wt% of the cross-linkable thermoplastic polymer component and from 10 wt% to 20 wt% of the halogenated silsesquioxane component. In a certain aspect the triboelectric polymer includes from 83 wt% to 87 wt% of the cross-linkable thermoplastic polymer component and from 13 wt% to 17 wt% of the halogenated silsesquioxane component.

An exemplary conductive fabric that may be formed according to aspects of the disclosure is illustrated in FIG. 1. The conductive fabric includes a plurality of woven fibers including the triboelectric polymer. The conductive material includes a conductive wire that is co-woven with the plurality of woven fibers. The conductive wire may be co-woven with the plurality of woven fibers in any suitable pattern, such as but not limited to a plain weave, a twill weave, a satin weave, etc. Any suitable weave pattern, such as but not limited to, 1x1, 2x1, 1x2, 3x1, 1x3, 4x1, 1x4, may be used. The plurality of woven fibers may be formed according to conventional methods, such as but not limited to extruding, melt spinning, electro spinning, or solution spinning the fibers from a mixture or solution of the triboelectric polymer.

The conductive wire includes, but is not limited to, copper, silver, gold, aluminum, conductive polymer, or a combination thereof. One exemplary conductive polymer is poly(3,4-ethylenedioxythiophene) (PEDOT).

FIG. 2 illustrates another conductive fabric that may be formed according to aspects of the disclosure. The plurality of woven fibers include a core-shell structure, with the core including a conductive wire as the conductive material and the shell including the triboelectric polymer. The conductive wire includes the conductive materials described herein. The core-shell fiber may be formed according to conventional methods, such as but not limited to pulling the conductive wire in a "pool" of the triboelectric polymer.

## Energy Harvesting System

In the present disclosure conductive fiber-based triboelectric energy harvesting (EH) system is described that can generate enough energy to power electronic circuits without the need for any external power supplies. A general block diagram of the energy harvesting (EH) system is shown in FIG. 3. The first block represents the conductive fabric in which the energy is harvested. The unit includes the conductive fabric described herein including a plurality of woven fibers including a triboelectric polymer and a conductive material incorporated into the plurality of woven fibers. When an electropositive material such as a finger, skin, or other material comes in contact with the triboelectric polymer, the difference in electron-affinity forces charges to flow to the electrode and then to the resistor, creating a voltage drop across the resistor according to Equation 1:

$$V = IR \qquad (1)$$

where,

- I: electric current measured in Ampere (A)
- R: Resistance of the resistor measured in Ohms ($\Omega$)
- V: Voltage or electrical potential difference measured in Volts (V)

A more detailed schematic of exemplary components of an EH system is illustrated in FIG. 4. In some aspects voltage generated by the conductive fabric is provided to a full-wave bridge rectifier circuit. The full-wave bridge rectifier eliminates negative cycles of the output voltage and makes it continuous through time, converting it to a DC voltage. The DC voltage is applied across a capacitor of a given value, starting the charging process of the capacitor. When the capacitor becomes fully charged, a switch is flipped to start the discharging process, allowing the energy stored by the capacitor to power the driving circuit/load.

Aspects of the disclosure thus relate to an energy harvesting system, including: (a) a conductive fabric including a plurality of woven fibers including a triboelectric polymer and a conductive material incorporated into the plurality of woven fibers; (b) a voltage rectifier; and (c) an energy storage unit. The triboelectric polymer includes from 80 wt% to 99 wt% of a cross-linkable thermoplastic polymer component and from 1 wt% to 20 wt% of a halogenated silsesquioxane component.

In some aspects the voltage rectifier is a full wave bridge rectifier.

The energy storage unit is a capacitor in certain aspects.

The conductive fabric included in the energy harvesting system may include any of the components and in any of the amounts described herein. In one particular aspect the triboelectric polymer included in the conductive fabric includes a cross-linkable polycarbonate (XPC) and a perfluorinated polyhedral oligomeric silsesquioxane (F-POSS).

In some aspects the conductive material includes a conductive wire and the conductive wire is co-woven with the plurality of woven fibers including the triboelectric polymer (see FIG. 1). The conductive wire may be co-woven with the plurality of woven fibers including the triboelectric polymer in any suitable weave pattern, including but not limited to the patterns described herein.

In certain aspects the plurality of woven fibers including the triboelectric polymer include a core-shell structure. The core includes the conductive wire and the shell includes the triboelectric polymer (see FIG. 2). The plurality of woven fibers may be woven in the fabric in any suitable weave pattern, including but not limited to the patterns described herein.

The conductive wire in these aspects may include, but is not limited to copper, silver, gold, aluminum, conductive polymer, or a combination thereof. One exemplary conductive polymer is poly(3,4-ethylenedioxythiophene) (PEDOT).

## Other Possible Applications

Fabrics/garments formed according to aspects described herein could be adapted for applications other than the energy harvesting ones described herein. For example, the fabric/garment may be connected to electrical components that allow storage and/or transmission of the signal generated. The integration of a wireless communication system could allow the user to track their activity instantaneously or to store it for medical monitoring. The application would not require a battery and/or the presence of a bulky unit. In some aspects, the electrical components could be incorporated into a waterproof housing or element to enable use of the fabric/garment in wet or high humidity conditions.

In further aspects the fabric/garment could be incorporated into robotic applications. The variety of tasks that robots can be programmed for is broad; in some cases the robot is required to distinguish whether it is touching a fragile material (e.g., glass), a robust material (e.g., a metallic part), or human skin. Conventional solutions focus on visual input

via a camera. A conductive fabric such as that described herein could be applied to the robot "hands" and provide an extra level of information to complement the visual recognition of the material. Gloves incorporating the fabric could enable determining, based on the generated signal, the material/object that is being touched. Signal processing can then determine the pressure needed to grab the object.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A conductive fabric comprising:

a plurality of woven fibers comprising a triboelectric polymer; and
a conductive material incorporated into the plurality of woven fibers,

wherein the triboelectric polymer comprises from 80 wt% to 99 wt% of a cross-linkable thermoplastic polymer component and from 1 wt% to 20 wt% of a halogenated silsesquioxane component.

Aspect 2. The conductive fabric according to Aspect 1, wherein the triboelectric polymer comprises from 80 wt% to 90 wt% of the cross-linkable thermoplastic polymer component and from 10 wt% to 20 wt% of the halogenated silsesquioxane component.

Aspect 3. The conductive fabric according to Aspect 1, wherein the triboelectric polymer comprises from 83 wt% to 87 wt% of the cross-linkable thermoplastic polymer component and from 13 wt% to 17 wt% of the halogenated silsesquioxane component.

Aspect 4. The conductive fabric according to any of Aspects 1 to 3, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

Aspect 5. The conductive fabric according to any of Aspects 1 to 3, wherein the cross-linkable thermoplastic polymer component is a cross-linkable polycarbonate (XPC).

Aspect 6. The conductive fabric according to any of Aspects 1 to 5, wherein the halogenated silsesquioxane component is a perfluorinated polyhedral oligomeric silsesquioxane (F-POSS).

Aspect 7. The conductive fabric according to any of Aspects 1 to 6, wherein the conductive material comprises a conductive wire, wherein the conductive wire is co-woven with the plurality of woven fibers comprising the triboelectric polymer.

Aspect 8. The conductive fabric according to Aspect 7, wherein the conductive wire comprises copper, silver, gold, aluminum, conductive polymer, or a combination thereof.

Aspect 9. The conductive fabric according to any of Aspects 1 to 6, wherein the plurality of woven fibers comprising the triboelectric polymer comprise a core-shell structure, wherein the core comprises a conductive wire and the shell comprises the triboelectric polymer.

Aspect 10. The conductive fabric according to Aspect 9, wherein the conductive wire comprises copper, silver, gold, aluminum, conductive polymer, or a combination thereof.

Aspect 11. An energy harvesting system comprising:

(a) a conductive fabric comprising a plurality of woven fibers comprising a triboelectric polymer and a conductive material incorporated into the plurality of woven fibers;
(b) a voltage rectifier; and
(c) an energy storage unit,

wherein the triboelectric polymer comprises from 80 wt% to 99 wt% of a cross-linkable thermoplastic polymer component and from 1 wt% to 20 wt% of a halogenated silsesquioxane component.

Aspect 12. The energy harvesting system according to Aspect 11, wherein the voltage rectifier is a full wave bridge rectifier.

Aspect 13. The energy harvesting system according to Aspect 11 or 12, wherein the energy storage unit is a capacitor.

Aspect 14. The energy harvesting system according to any of Aspects 11 to 13, wherein the triboelectric polymer comprises from 80 wt% to 90 wt% of the cross-linkable thermoplastic polymer component and from 10 wt% to 20 wt% of the halogenated silsesquioxane component.

Aspect 15. The energy harvesting system according to any of Aspects 11 to 13, wherein the triboelectric polymer

comprises from 83 wt% to 87 wt% of the cross-linkable thermoplastic polymer component and from 13 wt% to 17 wt% of the halogenated silsesquioxane component.

Aspect 16. The energy harvesting system according to any of Aspects 11 to 15, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

Aspect 17. The energy harvesting system according to any of Aspects 11 to 15, wherein the cross-linkable thermoplastic polymer component is a cross-linkable polycarbonate (XPC).

Aspect 18. The energy harvesting system according to any of Aspects 11 to 17, wherein the halogenated silsesquioxane component is a perfluorinated polyhedral oligomeric silsesquioxane (F-POSS).

Aspect 19. The energy harvesting system according to any of Aspects 11 to 18, wherein the conductive material comprises a conductive wire, wherein the conductive wire is co-woven with the plurality of woven fibers comprising the triboelectric polymer.

Aspect 20. The energy harvesting system according to Aspect 19, wherein the conductive wire comprises copper, silver, gold, aluminum, conductive polymer, or a combination thereof.

Aspect 21. The energy harvesting system according to any of Aspects 11 to 18, wherein the plurality of woven fibers comprising the triboelectric polymer comprise a core-shell structure, wherein the core comprises a conductive wire and the shell comprises the triboelectric polymer.

Aspect 22. The energy harvesting system according to Aspect 21, wherein the conductive wire comprises copper, silver, gold, aluminum, conductive polymer, or a combination thereof.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** A conductive fabric comprising:

a plurality of woven fibers comprising a triboelectric polymer; and
a conductive material incorporated into the plurality of woven fibers,
wherein the triboelectric polymer comprises from 80 wt% to 99 wt% of a cross-linkable thermoplastic polymer component and from 1 wt% to 20 wt% of a halogenated silsesquioxane component.

**2.** The conductive fabric according to claim 1, wherein the triboelectric polymer comprises from 80 wt% to 90 wt% of the cross-linkable thermoplastic polymer component and from 10 wt% to 20 wt% of the halogenated silsesquioxane component.

**3.** The conductive fabric according to claim 1, wherein the triboelectric polymer comprises from 83 wt% to 87 wt% of the cross-linkable thermoplastic polymer component and from 13 wt% to 17 wt% of the halogenated silsesquioxane component.

**4.** The conductive fabric according to any of claims 1 to 3, wherein the cross-linkable thermoplastic polymer component is selected from the group consisting of a cross-linkable polycarbonate (XPC), a cross-linkable polyetherimide (XPEI), a polyphenylene ether (XPPE), a polyethylene (XPE), a polypropylene (XPP), copolymers thereof, and combinations thereof.

**5.** The conductive fabric according to any of claims 1 to 3, wherein the cross-linkable thermoplastic polymer component

is a cross-linkable polycarbonate (XPC).

6. The conductive fabric according to any of claims 1 to 5, wherein the halogenated silsesquioxane component is a perfluorinated polyhedral oligomeric silsesquioxane (F-POSS).

7. The conductive fabric according to any of claims 1 to 6, wherein the conductive material comprises a conductive wire, wherein the conductive wire is co-woven with the plurality of woven fibers comprising the triboelectric polymer.

8. The conductive fabric according to any of claims 1 to 6, wherein the plurality of woven fibers comprising the triboelectric polymer comprise a core-shell structure, wherein the core comprises a conductive wire and the shell comprises the triboelectric polymer.

9. The conductive fabric according to claim 7 or 8, wherein the conductive wire comprises copper, silver, gold, aluminum, conductive polymer, or a combination thereof.

10. An energy harvesting system comprising:

(a) a conductive fabric comprising a plurality of woven fibers comprising a triboelectric polymer and a conductive material incorporated into the plurality of woven fibers;
(b) a voltage rectifier; and
(c) an energy storage unit,
wherein the triboelectric polymer comprises from 80 wt% to 99 wt% of a cross-linkable thermoplastic polymer component and from 1 wt% to 20 wt% of a halogenated silsesquioxane component.

11. The energy harvesting system according to claim 10, wherein the voltage rectifier is a full wave bridge rectifier and the energy storage unit is a capacitor.

12. The energy harvesting system according to claim 10 or 11, wherein the triboelectric polymer comprises from 80 wt% to 90 wt% of the cross-linkable thermoplastic polymer component and from 10 wt% to 20 wt% of the halogenated silsesquioxane component.

13. The energy harvesting system according to any of claims 10 to 12, wherein the cross-linkable thermoplastic polymer component is a cross-linkable polycarbonate (XPC) and the halogenated silsesquioxane component is a perfluorinated polyhedral oligomeric silsesquioxane (F-POSS).

14. The energy harvesting system according to any of claims 10 to 13, wherein the conductive material comprises a conductive wire, and the conductive wire is co-woven with the plurality of woven fibers comprising the triboelectric polymer.

15. The energy harvesting system according to any of claims 10 to 13, wherein the plurality of woven fibers comprising the triboelectric polymer comprise a core-shell structure, wherein the core comprises a conductive wire and the shell comprises the triboelectric polymer.

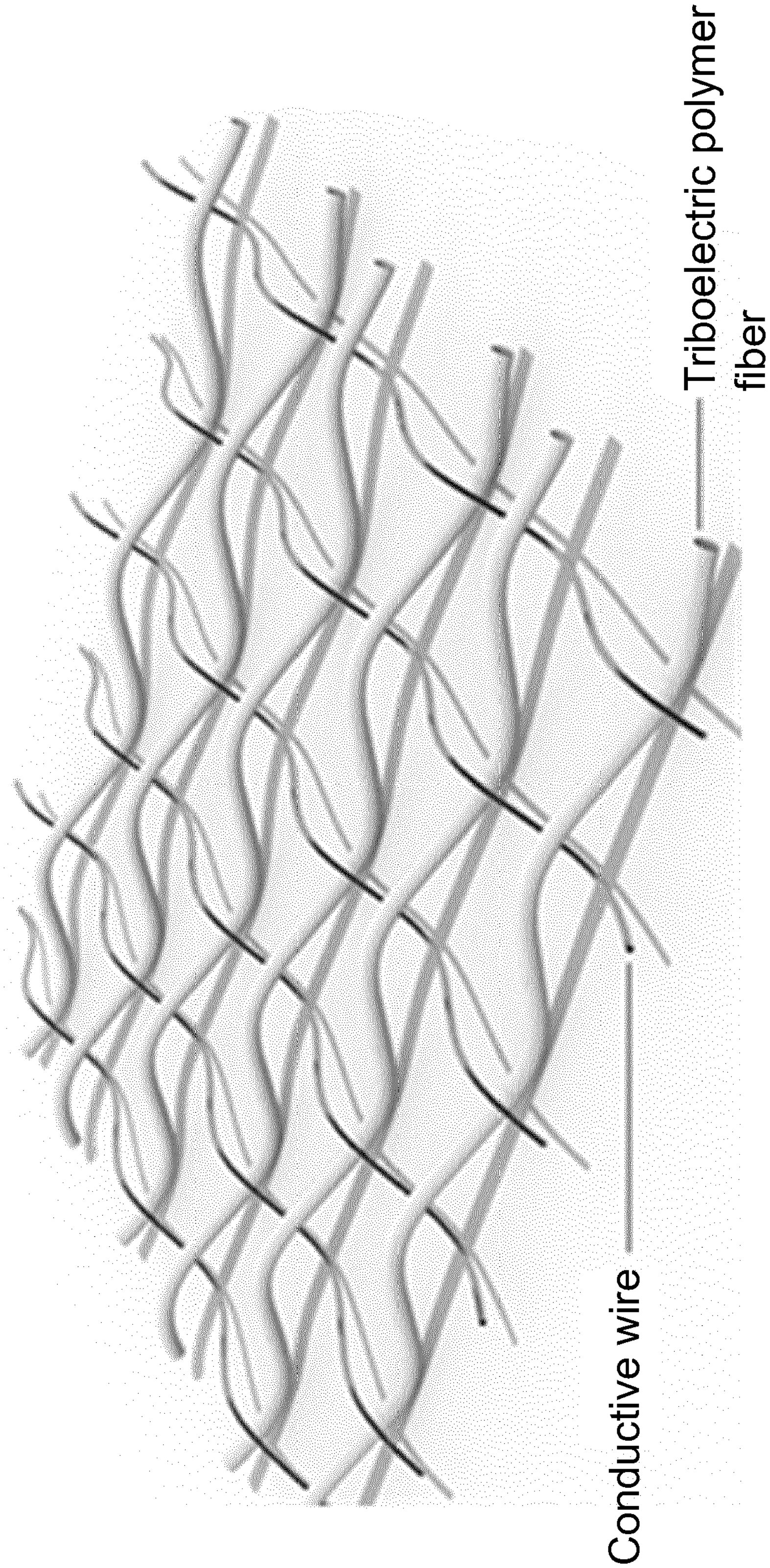


FIG. 1

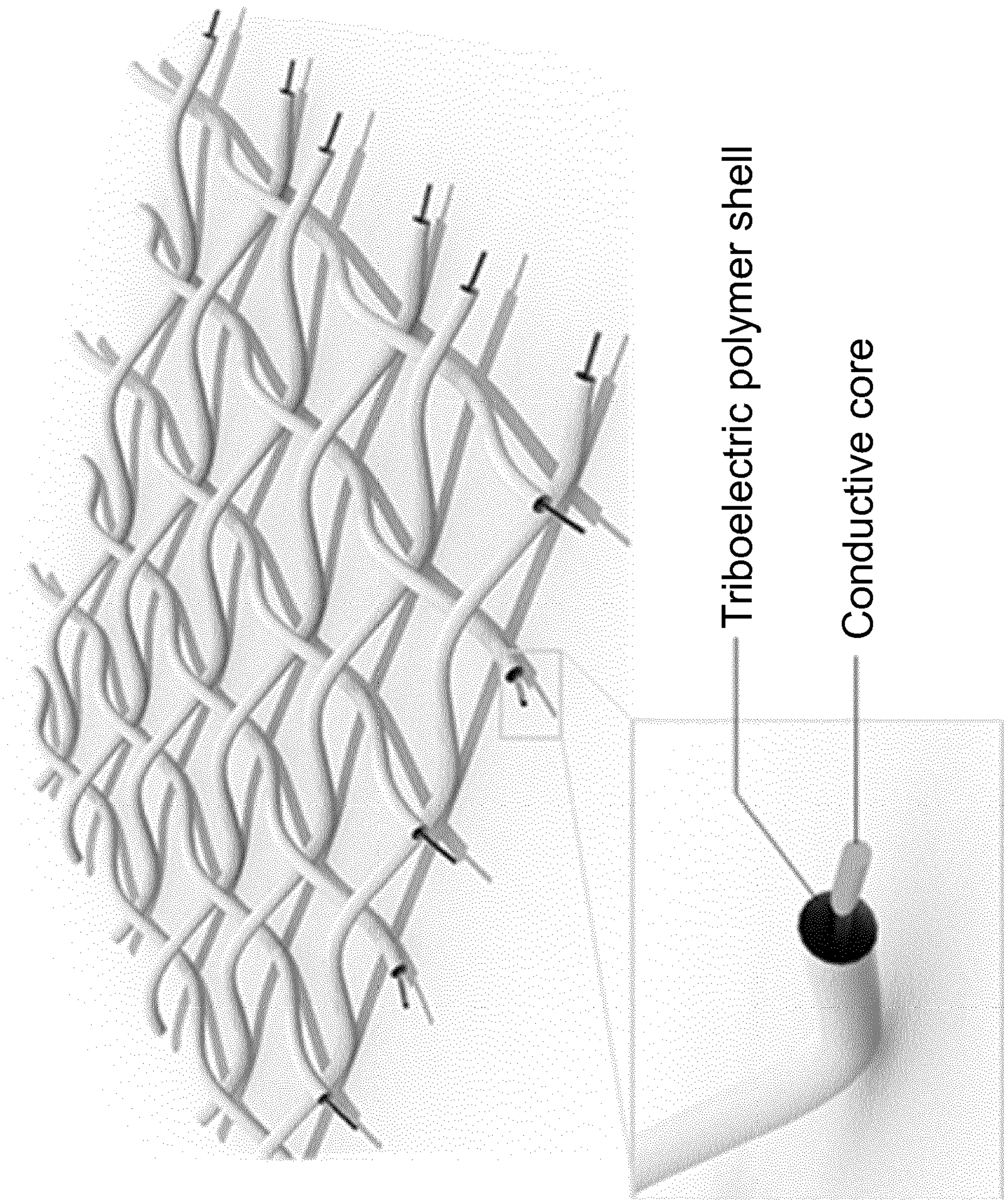


FIG. 2

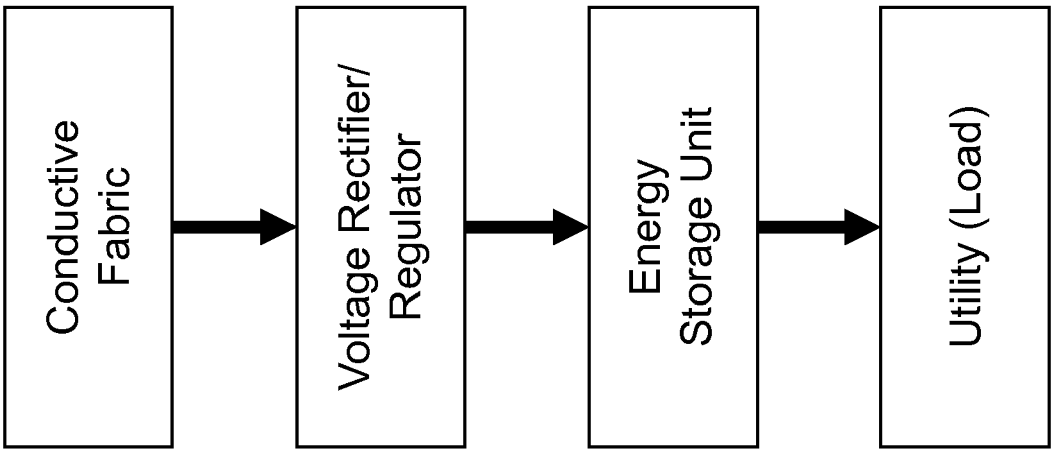
Conductive Fabric
Voltage Rectifier/ Regulator
Energy Storage Unit
Utility (Load)

FIG. 3

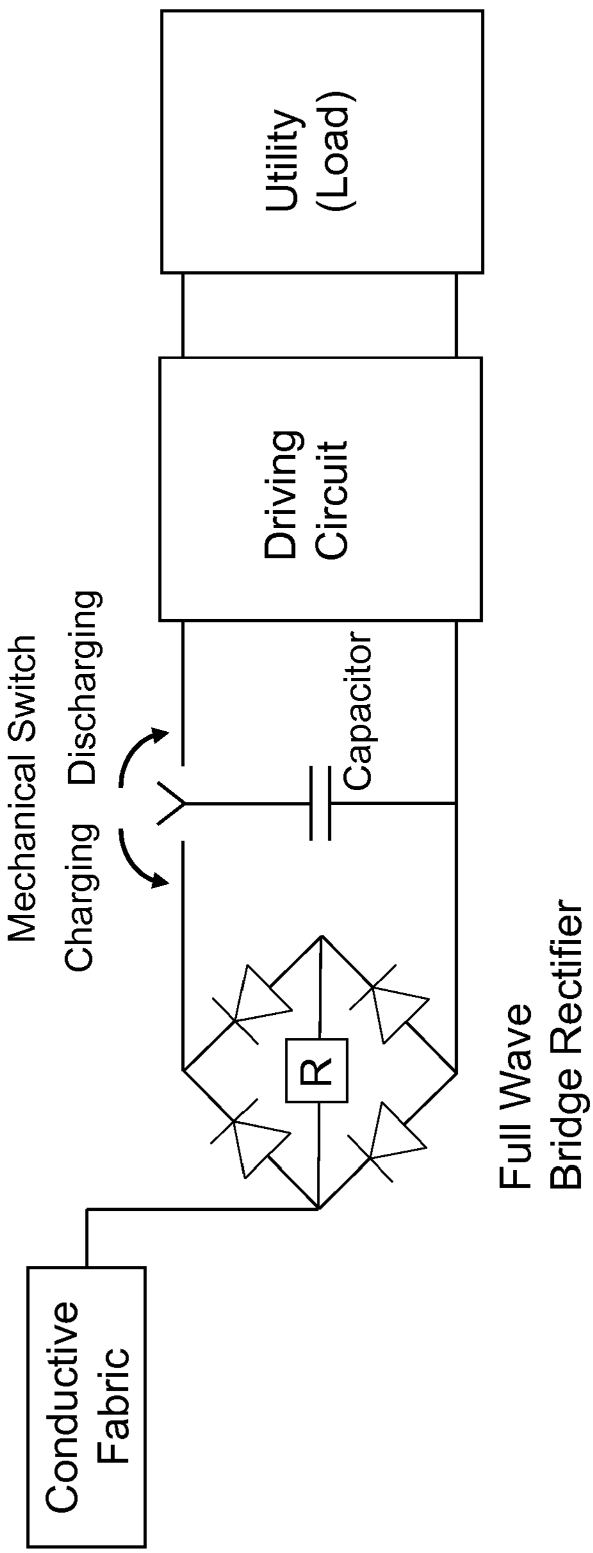
Conductive Fabric
Full Wave Bridge Rectifier
R
Mechanical Switch
Charging
Discharging
Capacitor
Driving Circuit
Utility (Load)

FIG. 4

Europäisches Patentamt
European Patent Office
Office européen des brevets

# EUROPEAN SEARCH REPORT

Application Number
EP 19 27 5114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KAI DONG ET AL: "3D Orthogonal Woven Triboelectric Nanogenerator for Effective Biomechanical Energy Harvesting and as Self-Powered Active Motion Sensors", ADVANCED MATERIALS, vol. 29, no. 38, 1 October 2017 (2017-10-01), page 1702648, XP055685799, DE ISSN: 0935-9648, DOI: 10.1002/adma.201702648 * figure 2 * ----- | 1-15 | INV. H02N1/04 |
| T | YU CHUANYONG ET AL: "Marvelous abilities for polyhedral oligomeric silsesquioxane to improve tribological properties of polyamide-imide/polytetrafluoroethylene coatings", JOURNAL OF MATERIALS SCIENCE, KLUWER ACADEMIC PUBLISHERS, DORDRECHT, vol. 53, no. 17, 24 May 2018 (2018-05-24), pages 12616-12627, XP036525595, ISSN: 0022-2461, DOI: 10.1007/S10853-018-2475-1 [retrieved on 2018-05-24] * Paragraph "Conclusions" * ----- | 1-15 | TECHNICAL FIELDS SEARCHED (IPC) H02N |
| A | PARK JIWON ET AL: "Flexible fiber-based triboelectric generator for self-powered sensors", 2016 IEEE SENSORS, IEEE, 30 October 2016 (2016-10-30), pages 1-3, XP033036841, DOI: 10.1109/ICSENS.2016.7808556 [retrieved on 2017-01-05] * Paragraph "II. Operating mechanism of the FTEG" * ----- | 1-15 | |

The present search report has been drawn up for all claims

1

| Place of search | Date of completion of the search | Examiner |
|---|---|---|
| Berlin | 15 April 2020 | Foussier, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170247507 A